# EUROPEAN PATENT SPECIFICATION

(11) **EP 0 904 861 B1**
(45) Date of publication and mention of the grant of the patent: **04.06.2003**
(21) Application number: 97115829.0
(22) Date of filing: 11.09.1997
(51) Int. Cl.: B21B 1/46, B21B 1/26

(54) **Method of producing thin hot rolled steel sheet, and apparatus to carry out the method**
Verfahren zum Warmwalzen von dünnem Walzband und entsprechende Warmwalzenanlage
Méthode de laminage à chaud d'une bande mince et installation pour cette méthode

(43) Date of publication of application: 31.03.1999
(73) Proprietor: NKK CORPORATION, Tokyo 100 (JP)
(72) Inventor: Yamamoto, Masaaki, Kawasaki-ku, Kawasaki 210 (JP); Kusaka, Takeo, Kawasaki-ku, Kawasaki 210 (JP); Ikenoue, Issei, Kawasaki-ku, Kawasaki 210 (JP); Terauchi, Takumasa, Kawasaki-ku, Kawasaki 210 (JP); Okaue, Masaaki, Kawasaki-ku, Kawasaki 210 (JP); Masuda, Sadakazu, Kawasaki-ku, Kawasaki 210 (JP); Minote, Toru, Kawasaki-ku, Kawasaki 210 (JP)
(74) Representative: Füchsle, Klaus, Dipl.-Ing.

(56) References cited:
- EP-A- 0 321 733
- WO-A-96/32509
- DE-A- 3 840 812
- US-A- 4 658 882
- PATENT ABSTRACTS OF JAPAN vol. 011, no. 128 (M-583), 22 April 1987 & JP 61 269904 A (NIPPON KOKAN KK), 29 November 1986,

## Description

### FIELD OF THE INVENTION:

The present invention relates to a method of producing a hot rolled steel sheet, especially a thin hot rolled steel sheet having a thickness of not more than 2.5 mm, and to manufacturing equipment to make such a steel sheet (see e.g. EP-A 0 321 733).

### BACKGROUND:

There has recently been a strong movement to use a thin hot rolled steel sheet having a thickness of not more than 2.5 mm as a substitute for a cold rolled steel sheet in order to decrease cost.

A key point for producing such a thin hot rolled steel sheet lies in a finishing temperature at the Ar₃ transformation temperature or higher, because a certain formability is required to permit its use as a substitute for a cold rolled steel sheet. For this purpose, means for increasing the line speed is generally used. Use of a continuous hot rolling technique, in which sheet bars, after roughing rolling, are welded and then rolled by a finishing rolling mill, enables stable rolling at a high line speed, and thus it is more advantageous to maintain the finishing temperature.

However, when producing a thin hot rolled steel sheet, an increase in the line speed in a conventional hot rolling process causes significant disturbance in running of the top or front or leading end of a strip on a run-out table after rolling and an inferior shape, and thus significantly decreases yield.

Although the use of the continuous hot rolling technique can decrease this problem, an expensive high-precision welding apparatus is required. Also, there is the possibility that welded parts between sheet bars are broken during rolling, or an inferior shape or characteristic abnormality occurs due to a variation in temperature in the vicinity of the welded parts.

### THE INVENTION:

It is an object of the present invention to solve the above problems, and thus to provide a method of producing, at low cost and high yield, a thin hot rolled steel sheet which can be used as a substitute for a cold rolled steel sheet, and equipment to carry out the method.

Briefly, in accordance with the invention, the method of producing a hot rolled steel sheet comprises performing hot direct rolling of a slab having a length exceeding the dimension of a reheating furnace for slabs using a hot direct rolling technique, in which continuous casting and hot rolling steps, as well as equipment, are directly connected.

The hot direct rolling technique in which continuous casting and hot rolling are connected eliminates the need for a reheating furnace of slabs, which has been used in a prior conventional hot rolling process. No limitation on the slab size results from the dimension of a reheating furnace. This permits rolling of a slab having a length exceeding the dimension of the reheating furnace. The use of such a long slab improves the yield because of the constant length of the top or leading end of a strip where an inferior shape would otherwise occur. This method requires no expensive welding apparatus, and thus causes neither increase in cost nor trouble in, or due to, welding.

When the finishing temperature cannot be kept at the Ar₃ transformation temperature or higher because of a large temperature drop during rolling, a sheet bar may be thermally insulated and/or secondarily heated immediately before finishing rolling.

In order to produce a thin hot rolled steel sheet used as a substitute for a cold rolled steel sheet by hot direct rolling of the long slab described above, hot direct rolling equipment is used. This equipment, in accordance with a feature of the invention, comprises directly connected, continuous casting equipment and hot rolling equipment. A coil box for coiling and thermally insulating a sheet bar and a sheet bar heating device for heating the sheet bar, are provided, in turn, between a roughing rolling mill and a finishing rolling mill of the hot rolling equipment.

### DRAWINGS:

Fig. 1 shows the surface temperature distribution of a sheet bar in the transverse direction;
Fig. 2 shows the surface temperature distribution of a sheet bar in the longitudinal direction; and
Fig. 3 is the schematic layout of hot direct rolling equipment in accordance with an embodiment of the present invention, in which the various elements of the equipment are shown highly schematically.

### DETAILED DESCRIPTION:

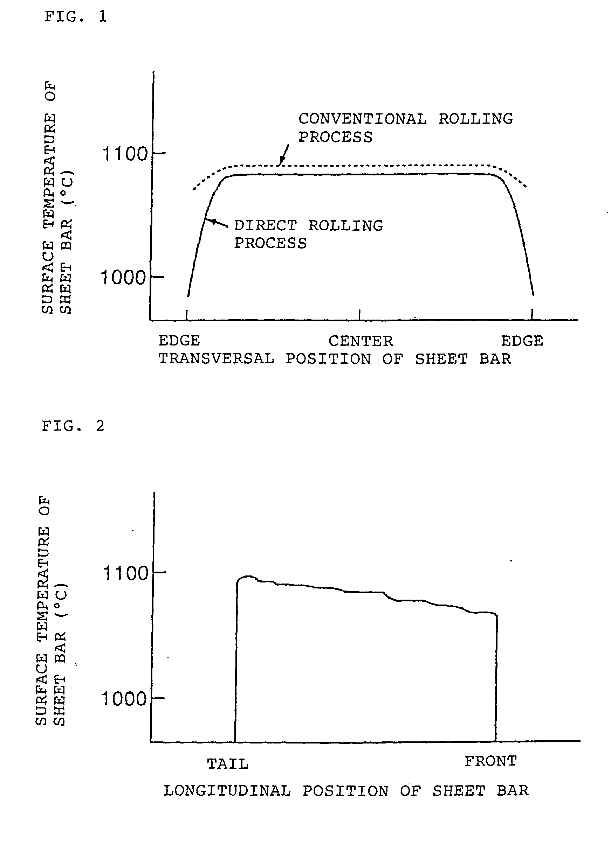

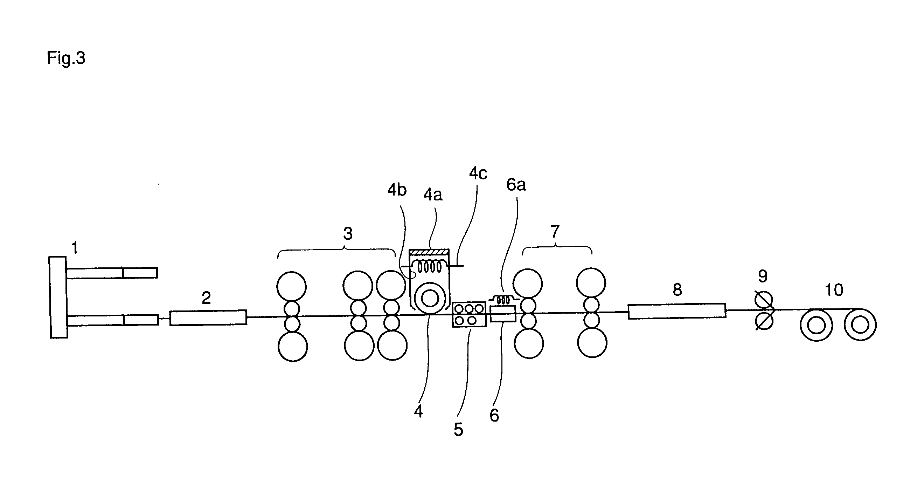

As shown in Fig. 1, the surface temperature of the sheet bar in the vicinity of each edge in the transverse direction in usual hot direct rolling is very much lower than that of a sheet bar passed through a conventional reheating furnace. This temperature distribution problem is solved by providing a coil box 4 (Fig. 3) and a sheet bar heating device 6 for reasons which will be described below.

In the temperature distribution of a slab immediately after production by continuous casting, the temperature of the inside of the slab is higher than that of the outer surface thereof because of its solidification process. In hot direct rolling, the temperature distribution can be maintained after roughing rolling if the sheet bar, after roughing rolling, is coiled and maintained for a certain time in the coil box 4 provided with thermal insulation. Thus, the entire coiled sheet bar is heated by the heat recuperated from the inside of the sheet bar.

It is difficult to keep the finishing temperature of the thin hot rolled steel sheet at the Ar₃ transformation temperature, or higher, only by recuperated heat in the coil box. Therefore, the sheet bar, uncoiled from the coil box 4, must be heated by a sheet bar heating device 6 before entering a finishing rolling mill 7. The sheet bar heating device 6 preferably has a degree of heating capability sufficient to supplement the recuperated heat in the coil box 4. This does not result in a substantial increase in energy cost.

Fig. 2 shows the surface temperature distribution of a sheet bar in the longitudinal direction. The temperature of the leading end or front end or top of the sheet bar is lower than that of the trailing end or tail thereof. The use of the coil box 4 of the present invention can eliminate the non-uniform temperature distribution in the longitudinal direction since the top end and the tail ends are reversed end-for-end when the sheet bar is uncoiled from the coil box 4.

A leveler 5 provided between the coil box 4 and the sheet bar heating device 6 corrects vertical warping of the uncoiled sheet bar, thereby enabling more uniform heating of the sheet bar in the sheet bar heating device 6.

A heating device, e.g. an induction coil 4c, is preferably provided on the coil box 4. Thus, uniformity of the temperature of the coiled sheet bar can be attained in a shorter time, and productivity is thus improved. The degree of heating preferably is dimensioned merely to supplement the recuperated heat from the inside of the sheet bar.

When the sheet bar beating device 6 is a solenoid coil type induction heating device, as schematically shown at 6a, the heating pattern can be changed to make it easy to attain uniformity of the temperature distribution in the longitudinal direction, and enable efficient heating within a short time as shown in Table 1.

**Table 1**

| Type of rough bar heating device | Time required for increasing temperature by 10°C | Efficiency of heating |
|---|---|---|
| Combustion heating (Entire heating furnace) | 250 sec | 0.70 |
| Induction heating (Solenoid type) | 8 sec | 0.75 |
| Induction heating (Transverse type) | 13 sec | 0.65 |

The hot rolling equipment comprises at least two coilers 10 and a high-speed shear 9 provided in front of the coilers. Thus, it is possible to simultaneously produce at least two coils of hot rolled strips, and produce thin hot rolled steel sheets with high yield and high productivity.

Fig. 3 shows, highly schematically, the line layout of the hot direct rolling equipment in accordance with an embodiment of the present invention. The hot direct rolling equipment comprises a continuous casting machine 1, a slab insulating cover 2, a roughing rolling mill 3, the coil box 4, the leveler 5, the sheet bar heating device 6, the finishing rolling mill 7, a cooling device 8, the high-speed shear 9 and the two coilers 10.

### Method of sheet steel production, and operation of equipment:

A slab, which can have a length exceeding the dimension of a reheating furnace of slabs, produced by the continuous casting machine 1, is passed through a conveyance passage provided with the slab insulating cover 2 for preventing temperature drop as much as possible, and conveyed to the roughing rolling mill 3 in the hot direct rolling process. The sheet bar rolled to a predetermined thickness by the roughing rolling mill 3 is coiled in the coil box 4 and maintained therein for a certain time. In time, the entire sheet bar is heated, since the recuperated heat from the inside of the sheet bar is substantial due to the prior high temperature history. The sheet bar is uncoiled and corrected by the leveler 5, heated by the sheet bar heating device 6 to an extent which can keep the finishing temperature at the Ar₃ transformation temperature or higher, and then rolled to a target or design thickness by the finishing rolling mill 7. The strip obtained by rolling is cooled by the cooling device 8, cut by the high-speed shear 9 so as to obtain a predetermined coil weight, and then coiled by the coilers 10 at a predetermined coiling temperature.

In this embodiment, since the long slab is used, the proportion of inferior goods can be reduced, and the yield of a thin hot rolled steel sheet can be improved.

The use of the coil box 4, the leveler 5 and the sheet bar heating device 6 increases the temperature of the sheet bar immediately before finishing rolling and makes the sheet bar uniform, so that a thin hot rolled steel sheet having a good shape and uniform properties can be produced.

Two coilers 10 and the high-speed shear 9 in front of the coilers 10 are provided. Two coils of hot rolled strips can thereby be produced, and thus thin hot rolled steel sheets can be produced with high yield and high productivity.

The coil box 4 preferably has a structure in which heat radiation to the outside is prevented as much as possible by using an insulating material shown schematically at 4a and/or a reflecting surface, or a plate shown schematically at 4b.

## Claims

1. A method of producing a hot rolled steel sheet comprising the steps of:
continuously casting a slab;
roughly hot rolling said slab into a sheet bar;
coiling said sheet bar;
finish hot rolling said sheet bar into a steel sheet;
**characterized in**
heating said sheet bar after uncoiling said coiled sheet bar; and **in that**
said continuous casting and hot rolling steps are directly sequentially connected by said continuously cast slab being then hot rolled into said sheet bar.

2. The method of producing a hot rolled steel sheet according to claim 1, including the step of thermally insulating the sheets after a first or roughing rolling.

3. The method of producing a hot rolled steel sheet according to claim 1, including the step of secondarily heating the sheet immediately before a further or finish rolling.

4. The method of producing a hot rolled steel sheet according to claim 1, wherein said rolling step comprises
a first or roughing rolling step and a second or finish rolling step;
said method further including the step of thermally insulating said sheet bar after said first or roughing rolling step,
and further the step of secondarily heating said sheet bar immediately prior to said second or finish rolling step.

5. Direct rolling apparatus for producing a hot rolled steel sheet comprising:
a continuous casting equipment (1);
a roughing hot rolling mill (3);
a coil box (4) for coiling and thermally insulating the sheet bars;
a sheet bar heating device (6); and
a finish hot rolling mill (7), **characterized in that** said continuous casting equipment (1) is directly connected to said roughing hot rolling mill (3) by a continuously cast slab being then hot rolled into a sheet bar, and that, said sheet bar heating device (6) is located between said coil box (4) and said finish hot rolling mill (7).

6. The hot direct rolling apparatus according to claim 5, further comprising a leveler (5) provided between the coil box (4) and the sheet bar heating device (6).

7. The hot direct rolling apparatus according to claim 5, wherein the coil box (4) includes a heater (4c).

8. The hot direct rolling apparatus of claim 5, wherein the coil box (4) comprises heat retention means (4a, 4b).

9. The hot direct rolling apparatus of claim 8, wherein the heat retention means comprise at least one of: insulation (4a); and a reflecting surface (4b).

10. The hot direct rolling apparatus according to claim 5, wherein the sheet bar heating device (6) is a solenoid coil type induction heating device (6a).

11. The hot direct rolling equipment according to claim 5, further including at least two coilers (10) and a high-speed shear (9) provided ahead, in the line of travel of the sheet bar, of the coilers (10) to receive the sheet bar from said finish rolling mill (7).

## Patentansprüche

1. Verfahren zum Erzeugen eines heißgewalzten Stahlblechs, umfassend die Schritte:
kontinuierliches Gießen einer Bramme;
grobes Heißwalzen der Bramme in einem Blechstreifen;
Wickeln des Blechstreifens;
Endheißwalzen des Blechstreifens in ein Stahlblech;
**gekennzeichnet durch** Erwärmen des Blechstreifens nach dem Abwickeln des gewickelten Blechstreifens; und **dadurch**, dass
das kontinuierliche Gießen und der Heizwalzschritt direkt sequentiell **durch** die kontinuierlich gegossene Bramme verbunden sind, die dann in den Blechstreifen heißgewalzt wird.

2. Verfahren zum Erzeugen eines heißgewalzten Stahlblechs nach Anspruch 1, umfassend den Schritt des thermischen Isolierens der Streifen nach dem ersten Walzen oder Grobwalzen.

3. Verfahren zum Erzeugen eines heißgewalzten Stahlblechs nach Anspruch 1, umfassend den Schritt des sekundären Erwärmens des Streifens unmittelbar vor einem weiteren Walzen oder einem Endwalzen.

4. Verfahren zum Erzeugen eines heißgewalzten Stahlblechs nach Anspruch 1, wobei der Walzschritt umfasst:
einen ersten Walzschritt oder Grobwalzschritt und einen zweiten Walzschritt oder Endwalzschritt;
wobei das Verfahren weiter, den Schritt des thermischen Isolierens des Blechstreifens nach dem ersten oder Grobwalzschritt umfasst;
und weiter den Schritt des sekundären Heizens des Blechstreifens unmittelbar vor dem zweiten Walzschritt oder Endwalzschritt umfasst.

5. Direkte Walzvorrichtung zum Erzeugen eines heißgewalzten Stahlblechs, umfassend:
eine kontinuierliche Gussausrüstung (1);
ein Grobheißwalzwerk (3);
eine Wickelbox (4) zum Wickeln und thermisch Isolieren der Blechstreifen;
eine Blechstreifen-Heizeinrichtung (6); und
ein Endheißwalzwerk (7);
**dadurch gekennzeichnet, dass** die kontinuierliche Gussausrüstung (1) direkt mit dem Grobheißwalzwerk (3) durch eine kontinuierlich gegossene Bramme verbunden ist, die dann in einen Blechstreifen gewalzt wird, und dass der Induktionsheizer (6) sich zwischen der Wickelbox (4) und dem Endheißwalzwerk (7) befindet.

6. Heißdirektwalzvorrichtung nach Anspruch 5, weiter umfassend einen Nivellierer (5), der zwischen der Wickelbox (4) und der Blechstreifen-Heizeinrichtung (6) vorgesehen ist.

7. Direktheißwalzvorrichtung nach Anspruch 5, wobei die Wickelbox (4) einen Heizer (4c) umfasst.

8. Direktheißwalzvorrichtung nach Anspruch 5, wobei die Wickelbox (4) Wärmerückhaltemittel (4a, 4b) umfasst.

9. Direktheißwalzvorrichtung nach Anspruch 8, wobei die Wärmerückhaltemittel mindestens eines aus einer Isolierung (4a) und einer reflektierenden Oberfläche (4b) umfassen.

10. Direktheißwalzvorrichtung nach Anspruch 5, wobei die Blechstreifen-Heizeinrichtung (6) eine Induktions-Heizeinrichtung (6a) vom Solenoidspulentyp ist.

11. Direktheißwalzausrüstung nach Anspruch 5, weiter umfassend mindestens zwei Wickler (10) und einen Hochgeschwiridigkeitsscherer (9), der in der Linie der Laufrichtung des Blechstreifens vor den Wicklern (10) vorgesehen ist, um den Blechstreifen aus dem Endwalzwerk (7) aufzunehmen.

## Revendications

1. Procédé pour produire une tôle d'acier laminé à chaud, comprenant les étapes consistant à:
couler en continu une brame;
laminer à chaud en dégrossissage ladite brame en un larget;
enrouler ledit larget;
laminer à chaud en finition ledit larget en une tôle d'acier;
**caractérisé par**
le chauffage dudit larget après le déroulement dudit larget enroulé, et
en ce que lesdites étapes de coulée en continu et de laminage à chaud sont directement reliées de manière séquentielle, du fait que ladite brame coulée en continu est ensuite laminée à chaud pour former ledit larget.

2. Procédé pour produire une tôle d'acier laminé à chaud selon la revendication 1, comprenant l'étape consistant à isoler thermiquement les tôles après un premier laminage ou laminage de dégrossissage.

3. Procédé pour produire une tôle d'acier laminé à chaud selon la revendication 1, comprenant l'étape consistant à chauffer secondairement la tôle, immédiatement avant un autre laminage ou laminage de finition.

4. Procédé pour produire une tôle d'acier laminé à chaud selon la revendication 1, dans lequel ladite étape de laminage comprend une première étape de laminage ou étape de laminage de dégrossissage, et une deuxième étape de laminage ou étape de laminage de finition;
ledit procédé comprenant en outre l'étape consistant à isoler thermiquement ledit larget après ladite première étape de laminage ou étape de laminage de dégrossissage,
et en outre l'étape consistant à chauffer secondairement ledit larget immédiatement avant ladite deuxième étape de laminage ou étape de laminage de finition.

5. Installation de laminage direct pour produire une tôle d'acier laminé à chaud, comprenant:
un équipement de coulée continue (1);
un laminoir à chaud de dégrossissage (3);
une cage d'enroulement (4), pour enrouler et isoler thermiquement le larget;
un dispositif de chauffage de larget (6); et
un laminoir à chaud de finition (7),
**caractérisée en ce que**
ledit équipement de coulée continue (1) est directement relié audit laminoir à chaud de dégrossissage (3), du fait qu'une brame coulée en continu est ensuite laminée à chaud en un larget, et **en ce que** ledit dispositif chauffage par induction (6) est situé entre ladite cage d'enroulement (4) et ledit laminoir à chaud de finition (7).

6. Installation de laminage à chaud direct selon la revendication 5, comprenant en outre un dispositif d'égalisation (5), prévu entre la cage d'enroulement (4) et le dispositif de chauffage de larget (6).

7. Installation de laminage à chaud direct selon la revendication 5, dans laquelle la cage d'enroulement (4) comprend un élément chauffant (4c).

8. Installation de laminage à chaud direct selon la revendication 5, dans laquelle la cage d'enroulement (4) comprend des moyens de retenue de chaleur (4a, 4b).

9. Installation de laminage à chaud direct selon la revendication 8, dans laquelle les moyens de retenue de chaleur comprennent au moins l'un d'un matériau isolant (4a) et d'une surface réfléchissante (4b).

10. Installation de laminage à chaud direct selon la revendication 5, dans laquelle le dispositif de chauffage de larget (6) est un dispositif de chauffage par induction (6a) du type solénoide.

11. Installation de laminage à chaud direct selon la revendication 5, comprenant en outre au moins deux enrouleurs (10) et une cisaille à grande vitesse (9) prévue avant les enrouleurs (10) , dans le trajet d'acheminement du larget, afin de recevoir le larget provenant dudit laminoir de finition (7).
